# EUROPEAN PATENT APPLICATION

(11) **EP 3 151 318 A1**
(43) Date of publication of application: **05.04.2017**
(21) Application number: 16000064.2
(22) Date of filing: 13.01.2016
(51) Int. Cl.: H01M 4/58, C01B 25/45, H01M 10/052, H01M 4/36, H01M 4/62, H01M 4/136

(54) **ELECTRODE MATERIAL FOR LITHIUM-ION RECHARGEABLE BATTERY, METHOD FOR MANUFACTURING ELECTRODE MATERIAL FOR LITHIUM-ION RECHARGEABLE BATTERY, ELECTRODE FOR LITHIUM-ION RECHARGEABLE BATTERY, AND LITHIUM-ION RECHARGEABLE BATTERY**

(30) Priority: 30.09.2015 JP 2015193477
(71) Applicant: Sumitomo Osaka Cement Co., Ltd., Tokyo 102-8465 (JP)
(72) Inventor: Oyama, Masataka, Tokyo, 102-8465 (JP); Oono, Kouji, Tokyo, 102-8465 (JP); Kitagawa, Takao, Tokyo, 102-8465 (JP)
(74) Representative: Müller-Boré & Partner Patentanwälte PartG mbB

(57) **Abstract**

Provided are an electrode material for a lithium-ion rechargeable battery including core particles of an active material and a carbonaceous film, in which a powder resistance is 150 Ω·cm or less, and a lithium-ion rechargeable battery produced using the electrode material and a lithiummetal exhibits a difference between a sum of a charge capacity with an upper limit voltage of 4.2 V and the lithium-ion rechargeable battery charged at a constant current and a charge capacity with the lithium-ion rechargeable battery charged at a constant voltage for seven days at 4.2 V after the constant current charging and a discharge capacity with the lithium-ion rechargeable battery discharged at a constant current to 2 V after the constant voltage charging reaches 25 mAh/g or less, a method for manufacturing the electrode material, an electrode including the electrode material, and a lithium-ion rechargeable battery including the electrode as a cathode.

## Description

### BACKGROUND OF THE INVENTION

### Field of the Invention

The present invention relates to an electrode material for a lithium-ion rechargeable battery, a method for manufacturing the same, an electrode for a lithium-ion rechargeable battery, and a lithium-ion rechargeable battery.

### Description of Related Art

In recent years, as a battery anticipated to have a small size, a light weight, and high capacity, a non-aqueous electrolyte-based rechargeable battery such as a lithium-ion rechargeable battery has been proposed and put into practical use. The lithium-ion rechargeable battery is constituted with a cathode and an anode which have properties capable of reversibly intercalating and deintercalating lithium ions, and a non-aqueous electrolyte.

As an anode active material for an anode material of a lithium-ion rechargeable battery, generally, a carbon-based material or a Li-containing metal oxide having properties capable of reversibly intercalating and deintercalating lithium ions is used. Examples of the above-described Li-containing metal oxide include lithium titanate (Li₄Ti₅O₁₂).

On the other hand, as a cathode material for a lithium-ion rechargeable battery, an electrode material mixture including a cathode active material, a binder, and the like is used. Examples of the cathode active material include Li-containing metal oxides having properties capable of reversibly intercalating and deintercalating lithium ions such as lithium iron phosphate (LiFePO₄). Inaddition, a cathode of a lithium-ion rechargeable battery is formed by applying this electrode material mixture as an electrode material to the surface of a metal foil called a current collector.

Compared with rechargeable batteries of the related art such as lead batteries, nickel-cadmium batteries, and nickel metal hydride rechargeable batteries, the lithium-ion rechargeable batteries have a lighter weight, a smaller size, and higher energy. Therefore, the lithium-ion rechargeable batteries are used not only as a small-size power supply used in portable electronic devices such as mobile phones and notebook personal computers but also as a large-size stationary emergency power supply.

In addition, recently, studies have been underway to use lithium-ion rechargeable batteries as a high-output power supply for plug-in hybrid vehicles, hybrid vehicles, electric power tools, and the like. For batteries used as the above-described high-output power supply, there is a demand for high-speed charge and discharge characteristics.

However, an electrode material including an electrode active material, for example, a lithium phosphate compound having properties capable of reversibly intercalating and deintercalating lithium ions has a problem with low electron conductivity. Therefore, as a method for increasing the electron conductivity of the electrode material, for example, the following method is known as the related art. The surfaces of particles of an electrode active material are covered with an organic compound which is a carbon source, then, the organic compound is carbonized. Therefore, a conductive carbonaceous film is formed on the surface of the electrode active material, and it is possible to interpose carbon in this conductive carbonaceous film as an electron conductive material. An electrode material having electron conductivity increased as described above is proposed (refer to Japanese Laid-open Patent Publication No. 2001-15111).

When the carbonization temperature of the organic compound is too low, the organic compound is not sufficiently decomposed and reacted, the organic compound is not sufficiently carbonized, and a high-resistance organic decomposed substance is generated as a decomposition reactant (refer to Japanese Laid-open Patent Publication No. 2013-069566). Meanwhile, when the carbonization temperature of the organic compound is too high, some of lithium iron phosphate which is active material powder is reduced with carbon, and low-valence iron-based impurities such as pure iron, divalent iron oxides, and iron phosphides are easily generated. In addition, these low-valence iron-based impurities are dissolved in an electrolyte and cause modification of an active material of the opposite electrode or generation of gas (refer to Japanese Patent No. 5480544).

### SUMMARY OF THE INVENTION

Examples of a method for carbonizing an organic compound include a thermal treatment using apparatuses such as a roller hearth kiln and a tubular furnace. In the thermal treatment using the above-described apparatuses, a mixture of an organic compound which serves as a source of a conductive carbonaceous film and an active material is injected into a calcination capsule made of a substance having excellent thermal conductivity such as carbon, and the calcination capsule including the mixture is introduced into a furnace having a high temperature. In addition, the organic compound is carbonized in the furnace, whereby an active material including a conductive carbonaceous film can be obtained.

In the above-described carbonization method, when the scale of the apparatus is increased in order to obtain a larger amount of an active material, it is usual to increase the capacity of the calcination capsule. However, when the capacity of the calcination capsule is increased, temperature unevenness in the calcination capsule becomes more significant during the thermal treatment. When the set temperature in the furnace is set to be high, it is possible to make the organic compound sufficiently carbonized even in a region in the calcination capsule having a low temperature. However, in a region in the calcination capsule having a high temperature, some of lithium iron phosphate which is an active material is reduced with carbon, thus, low-valence iron-based impurities such as pure iron, divalent iron oxides, and iron phosphides are generated, and the durability of an electrode material deteriorates. Conversely, when the set temperature in the furnace is set to be low, it is possible to suppress generation of iron-based impurities in the region in the calcination capsule having a high temperature. However, in a region in the calcination capsule having a low temperature, the organic compound is not sufficiently carbonized, a high-resistance decomposition reactant remains, and output characteristics deteriorate. As described above, when the organic compound is carbonized using a calcination capsule having a large capacity, it is necessary to sacrifice either durability or output characteristics, and there has been a problem in that it is difficult to satisfy both characteristics.

The present invention has been made in consideration of the above-described circumstances, and an object of the present invention is to provide an electrode material for a lithium-ion rechargeable battery having high output characteristics and high durability by reducing temperature unevenness in a calcination capsule, a method for manufacturing the same electrode material, an electrode for a lithium-ion rechargeable battery including the same electrode material, and a lithium-ion rechargeable battery including the same electrode as a cathode.

The present inventors and the like carried out intensive studies and consequently found that, in a step of calcinating a mixture of an organic compound which is a carbonaceous film source and an active material, when a thermally conductive auxiliary substance having higher thermal conductivity than the active material is added to the mixture, it is possible to reduce temperature unevenness in the calcination capsule including the mixture and completed the present invention. That is, the present invention is as described below.
[1] An electrode material for a lithium-ion rechargeable battery including core particles of an active material represented by LiFeₓMn_{1-x-y}M_{y}PO₄ (0.05≤x≤1.0, 0≤y≤0.14; here, M represents at least one element selected from Mg, Ca, Co, Sr, Ba, Ti, Zn, B, Al, Ga, In, Si, Ge, and rare earth elements) and a carbonaceous film coating surfaces of the core particles, in which a powder resistance is 150 Ω·cm or less, and a lithium-ion rechargeable battery produced using the electrode material for a cathode and a lithium metal for an anode exhibits battery characteristics in which a difference between a sum of a charge capacity when an upper limit voltage is set to 4.2 V relative to the lithium anode and the lithium-ion rechargeable battery is charged at a constant electric current and a charge capacity when the lithium-ion rechargeable battery is charged at a constant voltage for seven days at 4.2 V after the constant electric current charging and a discharge capacity when the lithium-ion rechargeable battery is discharged at a constant electric current to 2 V after the constant voltage charging reaches 25 mAh/g or less.
[2] A method for manufacturing an electrode material for a lithium-ion rechargeable battery including core particles of an active material represented by LiFeₓMn_{1-x-y}M_{y}PO₄(0.05≤x≤1.0, 0≤y≤0.14; here, M represents at least one element selected from Mg, Ca, Co, Sr, Ba, Ti, Zn, B, Al, Ga, In, Si, Ge, and rare earth elements), including a step of producing a dispersion liquid by dispersing, out of a lithium salt, a metallic salt including Fe, a metallic salt including Mn, a compound including M, and aphosphoricacidcompound, at least the lithium salt, the metallic salt including Fe, and the phosphoric acid compound in a dispersion medium and heating the dispersion liquid in a pressure resistant vessel, thereby obtaining an active material, a step of adding an organic compound which serves as a conductive carbon coat source to the active material, thereby preparing a mixture, and a step of inserting the mixture in a calcination capsule and calcinating the mixture, in which the step of calcinating the mixture is a step in which a thermally conductive auxiliary substance having higher thermal conductivity than the active material is added to the mixture, and then the mixture is calcinated.
[3] The method for manufacturing an electrode material for a lithium-ion rechargeable battery according to [2], in which an average of lengths of the thermally conductive auxiliary substance segments in a longitudinal direction is in a range of 1 mm to 100 mm.
[4] The method for manufacturing an electrode material for a lithium-ion rechargeable battery according to [2] or [3], in which the thermally conductive auxiliary substance is a carbonaceous material.
[5] An electrode for a lithium-ion rechargeable battery including the electrode material for a lithium-ion rechargeable battery according to [1].
[6] A lithium-ion rechargeable battery including a cathode, an anode, and a non-aqueous electrolyte, in which the electrode for a lithium-ion rechargeable battery according to [5] is provided as the cathode.

According to the present invention, it is possible to provide an electrode material for a lithium-ion rechargeable battery having high output characteristics and high durability, a method for manufacturing the same electrode material, an electrode for a lithium-ion rechargeable battery including the same electrode material, and a lithium-ion rechargeable battery including the same electrode as a cathode.

### DETAILED DESCRIPTION OF THE INVENTION

Hereinafter, embodiments of the electrode material for a lithium-ion rechargeable battery, the method for manufacturing the same electrode material, the electrode for a lithium-ion rechargeable battery, and the lithium-ion rechargeable battery of the present invention will be described.

Meanwhile, the present embodiment is a specific description for easier understanding of the gist of the present invention and, unless particularly otherwise described, does not limit the present invention.

### Electrode material for a lithium-ion rechargeable battery

An electrode material for a lithium-ion rechargeable battery (hereinafter, in some cases, referred to simply as an electrode material) of the present embodiment is an electrode material for a lithium-ion rechargeable battery including core particles of an active material represented by LiFeₓMn_{1-x-y}M_{y}PO₄ (0.05≤x≤1.0, 0≤y≤0.14; here, M represents at least one element selected from Mg, Ca, Co, Sr, Ba, Ti, Zn, B, Al, Ga, In, Si, Ge, and rare earth elements) and a carbonaceous film coating surfaces of the core particles, in which a powder resistance is 150 Ω·cm or less, and a lithium-ion rechargeable battery produced using the electrode material for a cathode and a lithium metal for an anode exhibits battery characteristics in which a difference between a sum of a charge capacity when an upper limit voltage is set to 4.2 V relative to the lithium anode and the lithium-ion rechargeable battery is charged at a constant electric current and a charge capacity when the lithium-ion rechargeable battery is charged at a constant voltage for seven days at 4.2 V after the constant electric current charging and a discharge capacity when the lithium-ion rechargeable battery is discharged at a constant electric current to 2 V after the constant voltage charging reaches 25 mAh/g or less.

### Core particles

The core particles used in the electrode material of the present embodiment are core particles of an active material represented by LiFeₓMn_{1-x-y}M_{y}PO₄ (0.05≤x≤1.0, 0≤y≤0.14; here, M represents at least one element selected from Mg, Ca, Co, Sr, Ba, Ti, Zn, B, Al, Ga, In, Si, Ge, and rare earth elements). Meanwhile, the rare earth elements refer to 15 elements of La, Ce, Pr, Nd, Pm, Sm, Eu, Gd, Tb, Dy, Ho, Er, Tm, Yb, and Lu which belong to the lanthanum series. In addition, the core particles used in the electrode material of the present embodiment may be inorganic particles of one compound represented by General Formula LiFeₓMn_{1-x-y}M_{y}PO₄ or inorganic particles of two or more compounds.

The average primary particle diameter of primary particles of the core particles used in the electrode material of the present embodiment is preferably in a range of 0.001 µm to 5 µm and more preferably in a range of 0.02 µm to 1 µm.

When the average primary particle diameter of primary particles of the core particles is 0.001 µm or more, it is possible to sufficiently coat the surfaces of the primary particles of the core particles with a carbonaceous film. In addition, it is possible to increase the discharge capacity at a high-speed charge and discharge of a lithium-ion rechargeable battery and to realize sufficient charge and discharge performance. On the other hand, when the average primary particle diameter of the primary particles of the core particles is 5 µm or less, it is possible to decrease the internal resistance of the primary particles of the core particles. In addition, it is possible to increase the discharge capacity at a high-speed charge and discharge of a lithium-ion rechargeable battery.

Here, the average particle diameter refers to the volume-average particle diameter. The average primary particle diameter of the primary particles of the core particles can be measured using a laser diffraction/scattering particle size distribution measurement instrument or the like. In addition, the average particle diameter may be computed by arbitrarily selecting a plurality of primary particles observed using a scanning electron microscope (SEM).

The shape of the primary particle of the core particle used in the electrode material of the present embodiment is not particularly limited. However, the shape of the primary particle of the core particle is preferably a spherical shape since it is easy to generate an electrode material made of spherical secondary particles, particularly, truly spherical secondary particles.

Another reason for the shape of the primary particle of the core particle being preferably a spherical shape is that it is possible to decrease the amount of a solvent when an electrode material paste is prepared by mixing the electrode material for a lithium-ion rechargeable battery, a binder resin (binding agent), and a solvent. In addition, an additional reason for the shape of the primary particle of the core particle being preferably a spherical shape is that it becomes easy to apply the electrode material paste to a current collector. Furthermore, when the shape of the primary particle of the core particle is a spherical shape, the surface area of the primary particles of the core particle is minimized, and it is possible to minimize the blending amount of the binder resin (binding agent) added to the electrode material paste. As a result, the internal resistance of the obtained electrode can be decreased. In addition, when the shape of the primary particle of the core particle is a spherical shape, it becomes easy to closely pack the primary particles, and thus it is possible to increase the amount of the electrode material packed per unit volume. As a result, it is possible to increase the electrode density, and a high-capacitylithium-ion rechargeable battery can be obtained.

### Carbonaceous film

The carbonaceous film coats the surfaces of the inorganic particles and improves the electron conductivity of the electrode material.

The thickness of the carbonaceous film is preferably in a range of 0.2 nm to 10 nm and more preferably in a range of 0.5 nm to 4 nm.

When the thickness of the carbonaceous film is 0.2 nm or more, it is possible to suppress incapability of forming a film having a desired resistance value due to the thickness of the carbonaceous film being too thin. In addition, it is possible to ensure conductivity suitable for an electrode material. On the other hand, when the thickness of the carbonaceous film is 10 nm or less, it is possible to suppress the battery capacity of the electrode material per unit mass being decreased.

In addition, when the thickness of the carbonaceous film is in a range of 0.2 nm to 10 nm, it becomes easy to closely pack the electrode material, and thus the amount of the electrode material for a lithium-ion rechargeable battery packed per unit volume increases. As a result, it is possible to increase the electrode density, and a high-capacity lithium-ion rechargeable battery can be obtained.

### Electrode material

The average particle diameter of the electrode material (the primary particles of the core particles coated with the carbonaceous film) of the present embodiment is preferably in a range of 0.01 µm to 5 µm and more preferably in a range of 0.02 µm to 1 µm.

When the average particle diameter of the electrode material is 0.01 µm or more, it is possible to suppress an increase in the mass of carbon which becomes necessary due to an increase in the specific surface area of the electrode material and to suppress a decrease in the charge and discharge capacity of the lithium-ion rechargeable battery. On the other hand, when the average particle diameter of the electrode material for a lithium-ion rechargeable battery is 5 µm or less, it is possible to suppress extension of a period of time taken for lithium ions or electrons to migrate in the electrode material. Therefore, it is possible to suppress deterioration of the output characteristics caused by an increase in the internal resistance of the lithium-ion rechargeable battery.

The powder resistance of the electrode material of the present embodiment is 150 Ω·cm or less, preferably 100 Ω·cm or less, and more preferably 30 Ω·cm or less. Meanwhile, the lower limit value of the powder resistance is not particularly limited and is, for example, 1 Ω·cm.

The powder resistance of the electrode material of the present embodiment can be measured using a four point measurement in which the electrode material is put into a mold and pressurized under a pressure of 50 MPa, thereby producing a compact, and four probes are brought into contact with the surfaces of the compact.

When the powder resistance of the electrode material is set to 150 Ω·cm or less, it is possible to obtain an electrode material having high output characteristics which does not include high-resistance decomposed substance and reactant that are generated in a case in which the organic compound is not sufficiently carbonized.

The amount of carbon included in the electrode material of the present embodiment is preferably in a range of 0.1% by mass to 10% by mass and more preferably in a range of 0.3% by mass to 3% by mass.

When the amount of carbon is 0.1% by mass or more, the discharge capacity of the lithium-ion rechargeable battery at a high charge-discharge rate is increased, and it is possible to realize sufficient charge and discharge rate performance. On the other hand, when the amount of carbon is 10% by mass or less, it is possible to suppress the battery capacity of the lithium-ion rechargeable battery per unit mass of the electrode material being decreased more than necessary. Meanwhile, the decrease in the battery capacity is caused by the excessive amount of carbon.

The carbon supporting amount relative to the specific surface area of the primary particles of the core particles in the electrode material of the present embodiment ([the carbon supporting amount]/[the specific surface area of the primary particles of the core particles]) is preferably in a range of 0.01 to 0.5 and more preferably in a range of 0.03 to 0.3.

When the carbon supporting amount is 0.01 or more, the discharge capacity of the lithium-ion rechargeable battery at a high charge-discharge rate is increased, and it is possible to realize sufficient charge and discharge rate performance. On the other hand, when the carbon-supporting amount is 0.5 or less, it is possible to suppress the battery capacity of the lithium-ion rechargeable battery per unit mass of the electrode material being decreased more than necessary. Meanwhile, the decrease in the battery capacity is caused by the excessive amount of carbon.

The specific surface area of the electrode material of the present embodiment is preferably 7 m²/g or more and more preferably 9 m²/g or more.

When the specific surface area is 7 m²/g or more, coarsening of the particles of the electrode material is suppressed, and it is possible to increase the diffusion rate of lithium amount the particles. Therefore, it is possible to improve the battery characteristics of the lithium-ion rechargeable battery.

Meanwhile, the lower limit value of the specific surface area of the electrode material of the present embodiment is not particularly limited and is, for example, 1 m²/g or more.

A lithium-ion rechargeable battery produced using the electrode material of the present embodiment for the cathode and a lithium metal for the anode exhibits battery characteristics in which the difference (hereinafter, this difference will be referred as to the trickle test irreversible capacity) between the sum of a charge capacity when an upper limit voltage is set to 4.2 V relative to the lithium anode and the lithium-ion rechargeable battery is charged at a constant electric current and a charge capacity when the lithium-ion rechargeable battery is charged at a constant voltage for seven days at 4.2 V after the constant electric current charging and a discharge capacity when the lithium-ion rechargeable battery is discharged at a constant electric current to 2 V after the constant voltage charging reaches 25 mAh/g or less, more preferably reaches 15 mAh/g or less, and more preferably 14 mAh/g or less. The trickle test irreversible capacity is correlated with the presence amount of low-valence iron-based impurities such as divalent iron oxides and iron phosphides. Therefore, when the trickle test irreversible capacity is 25 mAh/g or less, it is possible to decrease the elution amount of iron derived from the low-valence iron-based impurities, and an electrode material having high durability can be obtained.

In a case in which a voltage of 4.2 V is applied to lithium, the theoretical oxidation decomposition potential is reached, and thus the low-valence iron-based impurities are oxidized and decomposed. When the low-valence iron-based impurities are oxidized and decomposed, the dissolved iron ions are precipitated on the anode, a solid electrolyte interface (SEI) coat on the anode breaks, and lithium is deactivated due to an increase in the reaction resistance or re-precipitation of the SEI coat. Therefore, the amount of the low-valence iron-based impurities is preferably as small as possible. Oxidative decomposition come out as an irreversible charge capacity and appears as a charge and discharge capacity, and thus a decrease in the trickle test irreversible capacity is equivalent to a decrease in the amount of the low-valence iron-based impurities.

The reason for setting the voltage during the constant electric current charging to 4.2 V is that a tri- or higher-valent iron compound is not oxidized and decomposed at 4.2 V. That is, it is possible to detect the presence amount of only di- or lower-valent iron-based impurities from which iron is easily eluted out of iron-based impurities.

### Method for manufacturing electrode material for lithium-ion rechargeable battery

A method for manufacturing an electrode material for a lithium-ion rechargeable battery of the present embodiment (hereinafter, in some cases, referred to simply as the method for manufacturing an electrode material) is a method for manufacturing an electrode material for a lithium-ion rechargeable battery including core particles of an active material represented by LiFeₓMn_{1-x-y}M_{y}PO₄ (0.05≤x≤1.0, 0≤y≤0.14; here, M represents at least one element selected from Mg, Ca, Co, Sr, Ba, Ti, Zn, B, Al, Ga, In, Si, Ge, and rare earth elements), including a step (A) of producing a dispersion liquid by dispersing, out of a lithium salt, a metallic salt including Fe, a metallic salt including Mn, a compound including M, and a phosphoric acid compound, at least the lithium salt, the metallic salt including Fe, and the phosphoric acid compound in a dispersion medium and heating the dispersion liquid in a pressure resistant vessel, thereby obtaining an active material, a step (B) of adding an organic compound which serves as a conductive carbon coat source to the active material, thereby preparing a mixture, and a step (C) of inserting the mixture in a calcination capsule and calcinating the mixture, in which the step (C) of calcinating the mixture is a step in which a thermally conductive auxiliary substance having higher thermal conductivity than the active material is added to the mixture, and then the mixture is calcinated.

### Step (A)

In the step (A) of the method for manufacturing an electrode material for a lithium-ion rechargeable battery of the present embodiment, out of a lithium salt, a metallic salt including Fe, a metallic salt including Mn, a compound including M, and a phosphoric acid compound, at least the lithium salt, the metallic salt including Fe, and the phosphoric acid compound are dispersed in a dispersion medium so as to produce a dispersion liquid, and the dispersion liquid is heated in a pressure resistant vessel, thereby obtaining an active material.

The lithium salt, the metallic salt including Fe, the metallic salt including Mn, the compound including M, and the phosphoric acid compound are blended together in a molar ratio described below. Meanwhile, the lithium salt, the metallic salt including Fe, and the phosphoric acid compound are essential raw materials, and the metallic salt including Mn and the metallic salt including M are raw materials which are added as desired. In addition, M represents at least one element selected from Mg, Ca, Co, Sr, Ba, Ti, Zn, B, Al, Ga, In, Si, Ge, and rare earth elements.

The molar ratio (Li:Fe:Mn:M:P) between the lithium salt which is converted to a Li element, the metallic salt including Fe which is converted to an Fe element, the metallic salt including Mn which is converted to an Mn element, the compound salt including M which is converted to an M lement, and the phosphoric acid compound which is converted to a phosphorus element is preferably 1 to 4:0 to 1.5:0 to 1.5:0 to 0.2:1 and more preferably 2.5 to 3.5:0 to 1.1:0 to 1.1:0 to 0.1:1.

For example, the lithium salt, the metallic salt including Fe, the metallic salt including Mn, the compound including M, and the phosphoric acid compound are injected into a solvent including water as a main component and are stirred and mixed together, thereby producing a dispersion liquid.

When uniform mixing of these raw materials is taken into account, it is preferable to produce aqueous solutions of the respective raw materials and mix the aqueous solutions together, thereby producing a dispersion liquid.

Since it is necessary to obtain highly pure, highly crystalline, and extremely small core particles, the molar concentration of the raw materials in the dispersion liquid is preferably in a range of 1.1 mol/L to 2.2 mol/L.

As the lithium salt used for the production of the dispersion liquid, for example, at least one salt selected from a group made up of hydroxides such as lithium hydroxide (LiOH) ; lithium inorganic acid salts such as lithium carbonate (Li₂CO₃), lithium chloride (LiCl), lithium nitrate (LiNO₃), lithium phosphate (Li₃PO₄), lithium hydrogen phosphate (Li₂HPO₄), and lithium dihydrogen phosphate (LiH₂PO₄); lithium organic acid salts such as lithium acetate (LiCH₃COO) and lithium oxalate ((COOLi)₂); and hydrates thereof is preferably used.

Meanwhile, lithium phosphate (Li₃PO₄) can also be used as the phosphoric acid compound used for the production of the dispersion liquid.

As the metallic salt including Fe which is used for the production of the dispersion liquid, for example, at least one salt selected from a group made up of iron compounds such as iron (II) chloride (FeCl₂), iron (II) sulfate (FeSO₄), and iron (II) acetate (Fe(CH₃COO)₂) and hydrates thereof; trivalent iron compounds such as iron (III) nitrate (Fe(NO₃)₃), iron (III) chloride (FeCl₃), and iron (III) citrate (FeC₆H₅O₇); and lithium iron phosphates is preferably used.

As the metallic salt including Mn which is used for the production of the dispersion liquid, a Mn salt is preferred, and for example, at least one salt selected from a group made up of manganese (II) chloride (MnCl₂), manganese (II) sulfate (MnSO₄), manganese (II) nitrate (Mn(NO₃)₂), manganese (II) acetate (Mn(CH₃COO)₂), and hydrates thereof is preferably used.

As the compound including M which is used for the production of the dispersion liquid, at least one element selected from Mg, Ca, Co, Sr, Ba, Ti, Zn, B, Al, Ga, In, Si, Ge, and rare earth elements is preferably used.

As a raw material substance of Mg, for example, at least one salt selected from a group made up of magnesium (II) chloride (MgCl₂), magnesium (II) sulfate (MgSO₄), magnesium (II) nitrate (Mg(NO₃)₂), magnesium (II) acetate (Mg(CH₃COO)₂), and hydrates thereof is preferably used.

As a raw material substance of Ca, for example, at least one substance selected from a group made up of calcium (II) chloride (CaCl₂), calcium (II) sulfate (CaSO₄), calcium (II) nitrate (Ca(NO₃)₂), calcium (II) acetate (Ca(CH₃COO)₂), and hydrates thereof is preferably used.

A raw material substance of Co is preferably a Co salt, and, for example, at least one substance selected from a group made up of cobalt (II) chloride (CoCl₂), cobalt (II) sulfate (CoSO₄), cobalt (II) nitrate (Co(NO₃)₂), cobalt (II) acetate (Co(CH₃COO)₂), and hydrates thereof is preferably used.

As a raw material substance of Sr, for example, at least one substance selected from a group made up of strontium carbonate (SrCO₃), strontium sulfate (SrSO₄), and strontium hydroxide (Sr(OH)₂) is preferably used.

As a raw material substance of Ba, for example, at least one substance selected from a group made up of barium (II) chloride (BaCl₂), barium (II) sulfate (BaSO₄), barium (II) nitrate (Ba(NO₃)₂), barium (II) acetate (Ba(CH₃COO)₂), and hydrates thereof is preferably used.

As a raw material substance of Ti, for example, at least one substance selected from a group made up of titanium chlorides (TiCl₄, TiCl₃, and TiCl₂), titanium oxide (TiO), and hydrates thereof is preferably used.

A raw material substance of Zn is preferably a Zn salt, and, for example, at least one substance selected from a group made up of zinc (II) chloride (ZnCl₂), zinc (II) sulfate (ZnSO₄), zinc (II) nitrate (Zn(NO₃)₂), zinc (II) acetate (Zn(CH₃COO)₂), and hydrates thereof is preferably used.

As a raw material of B, for example, at least one substance selected from a group made up of boron compounds such as chlorides of boron, sulfoxides of boron, nitroxides of boron, acetoxides of boron, hydroxides or boron, and oxides of boron is preferably used.

As a raw material of Al, for example, at least one substance selected from a group made up of aluminum compounds such as aluminum chlorides, aluminum sulfates, aluminum nitrates, aluminum acetates, and aluminum hydroxides is preferably used.

As a raw material of Ga, for example, at least one substance selected from a group made up of gallium compounds such as gallium chlorides, gallium sulfates, gallium nitrates, gallium acetates, and gallium hydroxides is preferably used.

As a raw material of In, for example, at least one substance selected from a group made up of indium compounds such as indium chlorides, indium sulfates, indium nitrates, indium acetates, and indium hydroxides is preferably used.

As a raw material of Si, for example, at least one substance selected from a group made up of silicates such as sodium silicate and potassium silicate, silicon tetrachloride (SiCl₄), and organic silicon compounds is preferably used.

As a raw material of Ge, for example, at least one substance selected from a group made up of germanium compounds such as germanium chloride, germanium sulfate, germanium nitrate, germanium acetate, germanium hydroxide, and germanium oxide is preferably used.

As a raw material of the rare earth element, for example, at least one substance selected from a group made up of chlorides, sulfoxides, nitroxides, acetoxides, hydroxides, and oxides of Sc, Y, La, Ce, Pr, Nd, Pm, Sm, Eu, Gd, Tb, Dy, Ho, Er, Tm, Yb, and Lu is preferably used.

As the phosphoric acid compound used for the production of the dispersion liquid, for example, at least one compound selected from a group made up of phosphoric acids such as ortho phosphoric acid (H₃PO₄) and meta phosphoric acid (HPO₃); phosphates such as ammonium dihydrogen phosphate (NH₄H₂PO₄), diammonium hydrogen phosphate ((NH₄)₂HPO₄), ammonium phosphate ((NH₄)₃PO₄), lithium phosphate (Li₃PO₄), lithium hydrogen phosphate (Li₂HPO₄), and lithium dihydrogen phosphate (LiH₂PO₄); and hydrates thereof is preferably used.

The solvent including water as a main component is any one of water and water-based solvents which mainly include water and include an aqueous solvent such as an alcohol as necessary.

The aqueous solvent is not particularly limited as long as the solvent is capable of dissolving the lithium salt, the metallic salt including Fe, the metallic salt including Mn, the metallic salt including M, and the phosphoric acid compound, and examples thereof include alcohols such as methanol, ethanol, 1-propanol, 2-propanol (isopropyl alcohol: IPA), butanol, pentanol, hexanol, octanol, and diacetone alcohol, esters such as ethyl acetate, butyl acetate, ethyl lactate, propylene glycol monomethyl ether acetate, propylene glycol monoethyl ether acetate, and γ-butyrolactone, ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether, ketones such as acetone, methyl ethyl ketone (MEK), methyl isobutyl ketone (MIBK), acetyl acetone, and cyclohexanone, amides such as dimethyl formamide, N,N-dimethylacetoacetamide, and N-methyl pyrrolidone, glycols such as ethylene glycol, diethylene glycol, and propylene glycol, and the like. These aqueous solvents may be singly used or a mixture of two or more aqueous solvents may be used.

A method for dispersing the raw materials in the dispersion medium is not particularly limited as long as the raw materials are uniformly dispersed in the dispersion medium. As a device for dispersing the raw materials in the dispersion medium, a medium stirring-type dispersing device in which medium particles are stirred at a high speed such as a planetary mill, a vibratory ball mill, a beads mill, a paint shaker, or an attritor is preferably used.

Next, the prepared dispersion liquid is put into a pressure resistant vessel, is heated to a predetermined temperature, and is reacted for a predetermined period of time (hydrothermal reaction).

The reaction conditions are appropriately selected depending on the kind of the dispersion medium or a substance to be synthesized. For example, in a case in which water is used as the dispersion medium, the heating temperature is preferably in a range of 80°C to 374°C and more preferably in a range of 100°C to 350°C. In addition, the reaction time is preferably in a range of 30 minutes to 24 hours and more preferably in a range of 30 minutes to 5 hours. Furthermore, the pressure during the reaction is preferably in a range of 0.1 MPa to 22 MPa and more preferably in a range of 0.1 MPa to 17 MPa.

After that, for example, the reaction product obtained by decreasing the temperature is washed with water, thereby obtaining an active material.

### Step (B)

In the step (B) of the method for manufacturing an electrode material of the present embodiment, an organic compound which serves as a conductive carbon coat source is added to the active material, thereby preparing a mixture.

When the entire mass of the organic compound is converted to a carbon element, the blending amount of the organic compound relative to the active material is preferably in a range of 0.15 parts by mass to 15 parts by mass and more preferably in a range of 0.45 parts by mass to 4. 5 parts by mass relative to 100 parts by mass of the active material.

When the blending amount of the organic compound relative to the active material is 0.15 parts by mass or more, it is possible to set the coating ratio on the surfaces of the core particles of the carbonaceous film generated by thermally treating the organic compound to 80% or more. Therefore, it is possible to increase the discharge capacity of the lithium-ion rechargeable battery at a high charge-discharge rate, and it is possible to realize sufficient charge and discharge rate performance. On the other hand, when the blending amount of the organic compound relative to the active material is 15 parts by mass or less, it is possible to suppress the capacity of the lithium-ion rechargeable battery being decreased by relatively decreasing the blending ratio of the active material. In addition, when the blending amount of the organic compound relative to the active material is 15 parts by mass or less, it is possible to suppress the bulk density of the active material being increased due to excessive supporting of the carbonaceous film relative to the active material. Meanwhile, when the bulk density of the active material is increased, the electrode density decreases, and the battery capacity of the lithium-ion rechargeable battery per unit volume is decreased.

As the organic compound used for the preparation of the mixture, for example, at least one organic compound selected from a group made up of polyvinyl alcohols, polyvinylpyrrolidone, cellulose, starch, gelatin, carboxymethyl cellulose, methyl cellulose, hydroxymethyl cellulose, hydroxyethyl cellulose, polyacrylic acid, polystyrene sulfonate, polyacrylamide, polyvinyl acetate, glucose, fructose, galactose, mannose, maltose, sucrose, lactose, glycogen, pectin, alginic acid, glucomannan, chitin, hyaluronic acid, chondroitin, agarose, polyether, polyhydric alcohols, and the like is preferably used.

Examples of the polyhydric alcohols include polyethylene glycol, polypropylene glycol, polyglycerin, glycerin, and the like.

For example, a slurry may be produced by injecting an active material of the above-described active material and an organic compound which serves as a conductive carbon coat source into a solvent and dispersing the active material and the organic compound in the solvent. In addition, a mixture may be obtained by drying this slurry.

Examples of the solvent include water; alcohols such as methanol, ethanol, 1-propanol, 2-propanol (isopropyl alcohol: IPA), butanol, pentanol, hexanol, octanol, and diacetone alcohol; esters such as ethyl acetate, butyl acetate, ethyl lactate, propylene glycol monomethyl ether acetate, propylene glycol monoethyl ether acetate, and γ-butyrolactone; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether; ketones such as acetone, methyl ethyl ketone (MEK), methyl isobutyl ketone (MIBK),acetylacetone,andcyclohexanone;amides such as dimethyl formamide, N,N-dimethylacetoacetamide, and N-methyl pyrrolidone; glycols suchas ethylene glycol, diethylene glycol, and propylene glycol; and the like. These solvents may be singly used or a mixture of two or more solvents may be used. Among these solvents, the solvent is preferably water.

When the slurry is produced, a dispersing agent may be added thereto as necessary.

A method for dispersing the active material and the organic compound in the solvent is not particularly limited as long as the active material is uniformly dispersed, and the organic compound is dissolved or dispersed. Examples of a device used for the dispersion include medium stirring-type dispersion devices in which medium particles are stirred at a high speed such as a planetary mill, a vibratory ball mill, a beads mill, a paint shaker, and an attritor.

A granulated body of the mixture may be generated by spraying and drying the slurry using a spray-pyrolysis method in a high-temperature atmosphere, for example, in the atmosphere at a temperature in a range of 110°C to 200°C.

In this spray-pyrolysis method, in order to generate a substantially granular granulated body by rapidly drying the slurry, the particle diameter of a liquid droplet during the spraying is preferably in a range of 0.01 µm to 100 µm.

### Step (C)

In the step (C) of the method for manufacturing an electrode material of the present embodiment, the mixture is put into a calcination capsule and is calcinated.

As the calcination capsule, for example, a calcination capsule made of a substance having excellent thermal conductivity such as carbon is preferably used.

The calcination temperature is preferably in a range of 630°C to 790°C and more preferably in a range of 680°C to 770°C.

When the calcination temperature is 630°C or more, it is possible to suppress generation of a high-resistance organic decomposed substance due to sufficient decomposition and reaction of the organic compound and sufficient carbonization of the organic compound. On the other hand, when the calcination temperature is 790°C or less, it is possible to suppress generation of low-valence iron-based impurities such as pure iron, iron oxides, and iron phosphides due to reduction of some of the mixture with carbon.

The calcination time is not particularly limited as long as the organic compound is sufficiently carbonized within the time and is, for example, in a range of 0.01 hours to 20 hours.

The calcination atmosphere is preferably an inert atmosphere made of an inert gas such as nitrogen (N₂) and argon (Ar) or a reducing atmosphere including a reducing gas such as hydrogen (H₂). In a case in which it is necessary to further suppress oxidation of the mixture, the calcination atmosphere is more preferably a reducing atmosphere.

Due to the calcination in the step (C), the organic compound is decomposed and reacted, thereby generating carbon. In addition, the carbon attaches to the surfaces of the core particles of the active material and turns into a carbonaceous film. Therefore, the surfaces of the core particles of the active material are coated with the carbonaceous film.

Here, as the calcination time extends, lithium diffuses from the core particles to the carbonaceous film, lithium is present in the carbonaceous film, and the conductivity of the carbonaceous film is further improved.

However, when the thermal treatment time is too long, abnormal grain growth occurs or core particles of the active material in which some of lithium is deficient are generated, and thus the characteristics of the electrode material deteriorate. In addition, the characteristics of a lithium-ion rechargeable battery in which the electrode material degrade.

### Addition of thermally conductive auxiliary substance

In the present embodiment, in the step (C), a thermally conductive auxiliary substance having higher thermal conductivity than the active material is added to the mixture, and then the mixture is calcinated. Therefore, it is possible to make the temperature distribution in the calcination capsule during the calcination more uniform. As a result, it is possible to suppress generation of a portion in which the organic compound is not sufficiently carbonized due to temperature unevenness in the calcination capsule or generation of a portion in which the core particles are reduced with carbon.

The thermally conductive auxiliary substance is not particularly limited as long as the substance has higher thermal conductivity than the active material, but is preferably a substance that does not easily react with a precursor of the active material and the active material. This is because, when the thermally conductive auxiliary substance reacts with the active material or a precursor thereof, there is a concern that the battery activity of an active material obtained after the calcination may be impaired or there is a concern that it may be impossible to collect the thermally conductive auxiliary substance after the calcination and reuse the thermally conductive auxiliary substance.

Examples of the thermally conductive auxiliary substance include carbonaceous materials, alumina-based ceramics, magnesium-based ceramics, zirconia-based ceramics, silica-based ceramics, calcia-based ceramics, aluminum nitride, and the like. These thermally conductive auxiliary substances may be singly used or a mixture of two or more thermally conductive auxiliary substances may also be used.

The thermally conductive auxiliary substance is preferably a carbonaceous material. Examples of the carbonaceous material that can be used as the thermally conductive auxiliary substance include graphite, acetylene black (AB), vapor grown carbon fiber (VGCF), carbon nanotube (CNT), graphene, and the like. These thermally conductive auxiliary substances may be singly used or a mixture of two or more thermally conductive auxiliary substances may also be used. Among these carbonaceous materials, graphite is more preferred as the thermally conductive auxiliary substance.

The dimensions of the thermally conductive auxiliary substance are not particularly limited. However, in terms of thermal conduction efficiency, in order to enable a sufficiently uniform temperature distribution in the calcination capsule and decrease the additive amount of the thermally conductive auxiliary substance, the average of the lengths of the thermally conductive auxiliary substance segments in the longitudinal direction is preferably in a range of 1 mm to 100 mm and more preferably in a range of 5 mm to 30 mm. In addition, when the average of the lengths of the thermally conductive auxiliary substance segments in the longitudinal direction is in a range of 1 mm to 100 mm, it becomes easy to separate the thermally conductive auxiliary substance from the electrode material using a sieve.

In addition, the thermally conductive auxiliary substance preferably has a greater specific weight than the electrode material since separation using an air flow-type classifier is easy.

The additive amount of the thermally conductive auxiliary substance is also influenced by the dimensions of the thermally conductive auxiliary substance and is preferably in a range of 1% by volume to 50% by volume and more preferably in a range of 5% by volume to 30% by volume in a case in which the amount of the mixture is set to 100% by volume. When the additive amount of the thermally conductive auxiliary substance is 1% by volume or more, it is possible to make the temperature distribution in the calcination capsule sufficiently uniform. On the other hand, when the additive amount of the thermally conductive auxiliary substance is 50% by volume or less, it is possible to suppress a decrease in the amounts of the active material and the organic compound which can be calcinated in the calcination capsule.

### Step of separating thermally conductive auxiliary substance

After the calcination, it is preferable to separate the thermally conductive auxiliary substance and the electrode material by passing the mixture of the thermally conductive auxiliary substance and the electrode material.

### Electrode for lithium-ion rechargeable battery

An electrode for a lithium-ion rechargeable battery of the present embodiment (hereinafter, in some cases, referred to simply as the electrode) includes the electrode material of the present embodiment. More specifically, the electrode of the present embodiment includes a current collector and an electrode mixture layer formed on the current collector, and the electrode mixture layer includes the electrode material of the present embodiment.

That is, the electrode of the present embodiment is obtained by forming an electrode mixture layer on one main surface of a current collector using the electrode material of the present embodiment.

The electrode of the present embodiment is mainly used as a cathode for a lithium-ion rechargeable battery.

A method for manufacturing an electrode of the present embodiment is not particularly limited as long as the electrode can be formed on one main surface of a current collector using the electrode material of the present embodiment. Examples of the method for manufacturing an electrode of the present embodiment include the following method.

First, a paste of an electrode material is prepared by mixing the electrode material of the present embodiment, a binding agent, and a solvent.

In addition, a conductive auxiliary agent may be added to the electrode material of the present embodiment as necessary.

### Binding agent

As the binding agent, that is, a binder resin, at least one binding agent selected from a group made up of a polytetrafluoroethylene (PTFE) resin, apolyvinylidenefluoride (PVdF) resin, fluorine rubber, and the like.

The blending amount of the binding agent relative to the electrode material is not particularly limited and is, for example, preferably in a range of 1 part by mass to 30 parts by mass and more preferably in a range of 3 parts by mass to 20 parts by mass with respect to 100 parts by mass of the electrode material.

When the blending amount of the biding agent is 1 part by mass or more, it is possible to sufficiently increase binding properties between the electrode mixture layer and the current collector. Therefore, it is possible to suppress the electrode mixture layer being cracked or dropped during shaping of the electrode mixture layer by means of rolling. In addition, it is possible to suppress the battery capacity and the charge and discharge rate being decreased due to peeling of the electrode mixture layer from the current collector in a charging and discharging process of a lithium-ion rechargeable battery. On the other hand, when the blending amount of the binding agent is 30 parts by mass or less, it is possible to suppress the battery capacity being decreased at a high-speed charge and discharge rate due to a decrease in the internal resistance of the electrode material for a lithium-ion rechargeable battery.

### Conductive auxiliary agent

The conductive auxiliary agent is not particularly limited, and, as the conductive auxiliary agent, for example, at least one conductive auxiliary agent selected from a group of fibrous carbon such as acetylene black, Ketjen black, furnace black, vapor grown carbon fiber (VGCF), and carbon nanotube can be used.

### Solvent

To the paste of an electrode material including the electrode material of the present embodiment, a solvent is appropriately added in order to facilitate coating of an article to be coated such as a current collector.

Examples of the solvent include water; alcohols such as methanol, ethanol, 1-propanol, 2-propanol (isopropyl alcohol: IPA), butanol, pentanol, hexanol, octanol, and diacetone alcohol; esters such as ethyl acetate, butyl acetate, ethyl lactate, propylene glycol monomethyl ether acetate, propylene glycol monoethyl ether acetate, and γ-butyrolactone; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether; ketones such as acetone, methyl ethyl ketone (MEK), methyl isobutyl ketone (MIBK), acetyl acetone, and cyclohexanone; amides such as dimethyl formamide, N,N-dimethylacetoacetamide, and N-methyl pyrrolidone; glycols such as ethylene glycol, diethylene glycol, and propylene glycol; and the like. These solvents may be singly used or a mixture of two or more solvents may be used.

When the total mass of the electrode material, the binding agent, and the solvent is set to 100% by mass, the content rate of the solvent in the paste of an electrode material is preferably in a range of 50% by mass to 70% by mass and more preferably in a range of 55% by mass to 65% by mass.

When the content rate of the solvent in the paste of an electrode material is in a range of 50% by mass to 70% by mass, it is possible to obtain a paste of an electrode material having excellent electrode formability and excellent battery characteristics.

A method for mixing the electrode material for a lithium-ion rechargeable battery of the present embodiment, the binding agent, the conductive auxiliary agent, and the solvent is not particularly limited as long as it is possible to uniformly mix the above-described components. Examples thereof include methods in which a kneader such as a ball mill, a sand mill, a planetary mixer, a paint shaker, or a homogenizer is used.

The paste of an electrode material is applied to one main surface of the current collector so as to form a coating, and the coating is dried and then pressed under pressure, whereby it is possible to obtain an electrode including the electrode mixture layer formed on one main surface of the electrode current collector.

### Lithium-ion rechargeable battery

A lithium-ion rechargeable battery of the present embodiment is a lithium-ion secondary battery including a cathode, an anode, and a non-aqueous electrolyte, in which the electrode of the present embodiment is provided as the cathode. Specifically, the lithium-ion rechargeable battery of the present embodiment is a lithium-ion secondary battery including the cathode of the present embodiment as the cathode, an anode, a separator, and a non-aqueous electrolyte. The anode, the electrolyte, and the separator are not particularly limited.

### Anode

As the anode, for example, an anode material such as metallic Li, a carbon material, a Li alloy, or Li₄Ti₅O₁₂ is used.

### Non-aqueous electrolyte

The non-aqueous electrolyte can be produced, for example, in the following manner. Ethylene carbonate (EC) and ethyl methyl carbonate (EMC) are mixed together so that the volume ratio therebetween reaches 1:1. In addition, lithium hexafluorophosphate (LiPF₆) is dissolved in the obtained solvent mixture so that the concentration thereof reaches, for example, 1 mol/dm³, thereby producing a non-aqueous electrolyte.

### Separator

As the separator, it is possible to use, for example, porous propylene.

In addition, a solid electrolyte may be used instead of the non-aqueous electrolyte and the separator.

In the lithium-ion rechargeable battery of the present embodiment, since the electrode of the present embodiment is used as the cathode, the lithium-ion rechargeable battery has a high capacity and high durability.

### EXAMPLES

Hereinafter, the present invention will be more specifically described using examples and comparative examples, but the present invention is not limited to the following examples.

Electrode materials and lithium-ion rechargeable batteries of Examples 1 to 3 and Comparative Examples 1 to 3 were produced in the following manner.

### Example 1

### Synthesis of electrode material for lithium-ion rechargeable battery

Water was added to lithium phosphate (Li₃PO₄) (1000 mol) and iron (II) sulfate (FeSO₄) (1000 mol), and the components were mixed together so that the total amount reached 1000 L, thereby preparing a homogeneous slurry-form mixture.

Next, themixturewasputintoapressure-resistantairtight container having a capacity of 2000 L and was hydrothermally synthesized at 180°C for one hour, thereby generating a precipitate.

Next, the precipitate was washed with water, thereby obtaining a cake-form active material.

Next, a dispersion treatment was carried out on the active material (5 kg, solid content-equivalent) in a beads mill for one hour using polyvinyl alcohol (0.183 kg) as an organic compound and zirconia balls having a diameter of 1 mm as medium particles, thereby preparing a homogeneous slurry.

Next, the slurry was sprayed in the atmosphere at 180°C and dried, thereby obtaining a granulated body of the active material coated with an organic substance having an average particle diameter of 6 µm.

Graphite sintered bodies which had an average length of 10 mm in the longitudinal direction were added as a thermally conductive auxiliary substance to the granulated body so that the content thereof reaches 5% by volume of 100% by volume of the obtained granulated body, thereby obtaining a raw material for calcination. The raw material for calcination (5 kg) was placed to cover a graphite capsule having a capacity of 10 L, was calcinated for one hour in a non-oxidative gas atmosphere at 730°C, and then was held at 40°C for 30 minutes, thereby obtaining a sintered substance. The graphite sintered bodies were removed by passing the sintered substance through a sieve with φ75 µm, thereby obtaining an electrode material of Example 1 (electrode material A1).

### Production of lithium-ion rechargeable battery

The electrode material A1, polyvinylidene fluoride (PVdF) as a binding agent, and acetylene black (AB) as a conductive auxiliary agent were added to N-methyl-2-pyrrolidone (NMP) which was a solvent so that the mass ratio therebetween in a paste reached electrode material (A1):AB:PVdF=90:5:5, and the components were mixed together, thereby preparing the paste of an electrode material.

Next, the paste of an electrode material was applied to a surface of a 30 µm-thick aluminum foil (current collector) so as to form a coating, and the coating was dried, thereby forming a cathode mixture layer on the surface of the aluminum foil. After that, the cathode mixture layer was pressed under a predetermined pressure so as to obtain a predetermined density, thereby producing a cathode of Example 1.

Next, a circular plate having a diameter of 16 mm was produced from the cathode using a shaping machine by means of punching, was vacuum-dried, and then a lithium-ion rechargeable battery of Example 1 was produced using a stainless steel (SUS) 2016 coil cell in a dried argon atmosphere.

Metallic lithium was used as an anode, a porous polypropylene film was used as a separator, and a LiPF₆ solution (1 M) was used as an electrolyte (non-aqueous electrolyte). As the LiPF₆ solution, a solution obtained by mixing ethylene carbonate and ethyl methyl carbonate so that the volume ratio therebetween reached 1:1 was used.

### Example 2

An electrode material (A2) of Example 2 was obtained in the same manner as in Example 1 except for the fact that the calcination temperature was set to 760°C.

In addition, a lithium-ion rechargeable battery of Example 2 was produced in the same manner as in Example 1 except for the fact that the electrode material (A2) of Example 2 was used.

### Example 3

An electrode material (A3) of Example 3 was obtained in the same manner as in Example 1 except for the fact that the calcination temperature was set to 680°C.

In addition, a lithium-ion rechargeable battery of Example 3 was produced in the same manner as in Example 1 except for the fact that the electrode material (A3) of Example 3 was used.

### Comparative Example 1

Water was added to lithium phosphate (Li₃PO₄) (1000 mol) and iron (II) sulfate (FeSO₄) (1000 mol), and the components were mixed together so that the total amount reached 1000 L, thereby preparing a homogeneous slurry-form mixture.

Next, themixturewasputintoapressure-resistantairtight container having a capacity of 2000 L and was hydrothermally synthesized at 180°C for one hour, thereby generating a precipitate.

Next, the precipitate was washed with water, thereby obtaining a cake-form active material.

Next, a dispersion treatment was carried out on the active material (5 kg, solid content-equivalent) in a beads mill for one hour using polyvinyl alcohol (0.183 kg) as an organic compound and zirconia balls having a diameter of 1 mm as medium particles, thereby preparing a homogeneous slurry.

Next, the slurry was sprayed in the atmosphere at 180°C and dried, thereby obtaining a granulated body of the active material coated with an organic substance having an average particle diameter of 6 µm.

Next, the granulated body (5 kg) was placed to cover a graphite capsule having a capacity of 10 L, was calcinated for one hour in a non-oxidative gas atmosphere at 800°C, and then was held at 40°C for 30 minutes, thereby obtaining an electrode material of Comparative Example 1 (electrode material C1).

In addition, a lithium-ion rechargeable battery of Comparative Example 1 was produced in the same manner as in Example 1 except for the fact that the electrode material (C1) of Comparative Example 1 was used.

### Comparative Example 2

An electrode material (C2) of Comparative Example 2 was obtained in the same manner as in Comparative Example 1 except for the fact that the calcination temperature was set to 760°C.

In addition, a lithium-ion rechargeable battery of Comparative Example 2 was produced in the same manner as in Example 1 except for the fact that the electrode material (C2) of Comparative Example 2 was used.

### Comparative Example 3

An electrode material (C3) of Comparative Example 3 was obtained in the same manner as in Comparative Example 1 except for the fact that the calcination temperature was set to 730°C.

In addition, a lithium-ion rechargeable battery of Comparative Example 3 was produced in the same manner as in Example 1 except for the fact that the electrode material (C3) of Comparative Example 3 was used.

### Evaluation of electrode material for lithium-ion rechargeable battery

The electrode materials of Examples 1 to 3 and Comparative Examples 1 to 3 were evaluated as described below.

### (1) Powder resistance

The electrode material was put into a mold and shaped under a pressure of 50 MPa, thereby producing a measurement specimen. In addition, the powder resistance of the electrode material was measured by means of a four point measurement using a low resistivity meter (manufactured by Mitsubishi Chemical Corporation, model No.: Loresta-GP) at 25°C.

### Evaluation of lithium-ion rechargeable battery

The lithium-ion rechargeable batteries of Examples 1 to 3 and Comparative Examples 1 to 3 were evaluated as described below.

### (1) Trickle test irreversible capacity

A battery produced using a lithium metal as an anode was constant-electric-current-charged at an environmental temperature of 60°C and an electric current value of 0.1 C until the battery voltage reached 4.2 V and then, switching to constant voltage charging, was charged at a constant voltage for seven days. After that, the battery was discharged at a constant electric current at an electric current value of 0.1 C until the battery voltage reached 2 V. The difference between the sum of a constant electric current charge capacity and a constant voltage charge capacity and a constant electric current discharge capacity was considered as the trickle test irreversible capacity.

### (2) 5 C/0.1 C discharge capacity ratio

A battery produced using a lithium metal as an anode was constant-electric-current-charged at an environmental temperature of 25°C and an electric current value of 0.1 C until the battery voltage reached 4.2V, then, was charged at a constant voltage, and the charging was stopped when the electric current value reached 0.01 C. After that, the battery was discharged at a discharge electric current of 0.1 C, and the discharging was stopped when the battery voltage reached 2 V. The discharge capacity at this time was measured and used as the 0.1 C discharge capacity. Next, the battery was charged at a constant electric current at an electric current value of 1 C until the battery voltage reached 4.2 V, then, was charged at a constant voltage, and the charging was stopped when the electric current value reached 0.1 C. After that, the battery was discharged at a discharge electric current of 5 C, and the discharging was stopped when the battery voltage reached 2 V. The discharge capacity at this time was measured and used as the 5 C discharge capacity. A value obtained by dividing the 5 C discharge capacity by the 0.1 C discharge capacity was considered as the 5C/0.1C discharge capacity ratio.

### (3) 500 Cycle discharge capacity retention

A battery produced using natural graphite as an anode was constant-electric-current-charged at an environmental temperature of 60°C and an electric current value of 2 C until the battery voltage reached 4.2V, then, was charged at a constant voltage, and the charging was stopped when the electric current value reached 0.01 C. After that, the battery was discharged at a discharge electric current of 2 C, and the discharging was stopped when the battery voltage reached 2 V. The discharge capacityat this time was measured and used as the initial capacity.

After that, charging and discharging was repeated under the above-described conditions, the discharge capacity was measured at the 500^{th} cycle, and the discharge capacity retention relative to the initial capacity was computed.

### Evaluation results

The evaluation results of the electrode materials and the lithium-ion rechargeable batteries of Examples 1 to 3 and Comparative Examples 1 to 3 were shown in Table 1.

**[Table 1]**

| | Thermally conductive auxiliary agent | Calcination temperature resistance [°C] | Powder resistance [Ω·cm] | Trickle test irreversible capacity [mAh/g] | 5 C/0.1 C discharge capacity ratio | 500 cycle capacity retention [%] |
|---|---|---|---|---|---|---|
| Example 1 | Graphite sintered body | 730 | 13 | 19 | 0.89 | 76 |
| Example 2 | Graphite sintered body | 760 | 9 | 21 | 0.90 | 72 |
| Example 3 | Graphite sintered body | 680 | 25 | 17 | 0.85 | 73 |
| Comparative Example 1 | None | 800 | 8 | 65 | 0.89 | 54 |
| Comparative Example 2 | None | 760 | 161 | 19 | 0.78 | 71 |
| Comparative Example 3 | None | 730 | 287 | 18 | 0.76 | 69 |

When Examples 1 to 3 and Comparative Examples 1 to 3 are compared with each other from the results in Table 1, it could be confirmed that, in the lithium-ion rechargeable batteries of Examples 1 to 3, the 5 C/0.1 C discharge capacity ratio was 0.85 or more, and the capacity retention relative to the initial capacity at the 500^{th} cycle was 70% or more. On the other hand, it could be confirmed that, in the lithium-ion rechargeable batteries of Comparative Examples 2 and 3, the 5 C/0.1 C discharge capacity ratio was 0.85 or less, and, in the lithium-ion rechargeable batteries of Comparative Examples 1 and 3, the capacity retention relative to the initial capacity at the 500^{th} cycle was 70% or less.

According to the method for manufacturing an electrode material for a lithium-ion rechargeable battery of the present invention, it is possible to reduce temperature unevenness in a calcination capsule and sufficiently carbonize an organic compound. Therefore, it is possible to reduce the amount of low-valence iron-based impurities in the electrode material for a lithium-ion rechargeable battery of the present invention. A lithium-ion rechargeable battery including a cathode for a lithium-ion rechargeable battery produced using the electrode material for a lithium-ion rechargeable battery has excellent output characteristics, durability, and stability. In addition, the lithium-ion rechargeable battery has a high discharge capacity and a high energy density and thus can also be applied to a next-generation rechargeable battery from which a higher voltage, a higher energy density, higher load characteristics, and higher-speed charge and discharge characteristics are expected. In this case, the effects of the present invention become extremely strong.

## Claims

1. An electrode material for a lithium-ion rechargeable battery comprising:
core particles of an active material represented by LiFeₓMn_{1-x-y}M_{y}PO₄ (0.05≤x≤1.0, 0≤y≤0.14; here, M represents at least one element selected from Mg, Ca, Co, Sr, Ba, Ti, Zn, B, Al, Ga, In, Si, Ge, and rare earth elements); and
a carbonaceous film coating surfaces of the core particles,
wherein a powder resistance is 150 Ω·cm or less, and
a lithium-ion rechargeable battery produced using the electrode material for a cathode and a lithium metal for an anode exhibits battery characteristics in which a difference between a sum of a charge capacity when an upper limit voltage is set to 4.2 V relative to the lithium anode and the lithium-ion rechargeable battery is charged at a constant electric current and a charge capacity when the lithium-ion rechargeable battery is charged at a constant voltage for seven days at 4.2 V after the constant electric current charging and a discharge capacity when the lithium-ion rechargeable battery is discharged at a constant electric current to 2 V after the constant voltage charging reaches 25 mAh/g or less.

2. A method for manufacturing an electrode material for a lithium-ion rechargeable battery including core particles of an active material represented by LiFeₓMn_{1-x-y}M_{y}PO₄ (0.05≤x≤1.0, 0≤y≤0.14; here, M represents at least one element selected from Mg, Ca, Co, Sr, Ba, Ti, Zn, B, Al, Ga, In, Si, Ge, and rare earth elements), comprising:
a step of producing a dispersion liquid by dispersing, out of a lithium salt, a metallic salt including Fe, a metallic salt including Mn, a compound including the M, and a phosphoric acid compound, at least the lithium salt, the metallic salt including Fe, and the phosphoric acid compound in a dispersion medium and heating the dispersion liquid in a pressure resistant vessel, thereby obtaining an active material;
a step of adding an organic compound which serves as a conductive carbon coat source to the active material, thereby preparing a mixture; and
a step of inserting the mixture in a calcination capsule and calcinating the mixture,
wherein the step of calcinating the mixture is a step in which a thermally conductive auxiliary substance having higher thermal conductivity than the active material is added to the mixture, and then the mixture is calcinated.

3. The method for manufacturing an electrode material for a lithium-ion rechargeable battery according to Claim 2,
wherein an average of lengths of the thermally conductive auxiliary substance segments in a longitudinal direction is in a range of 1 mm to 100 mm.

4. The method for manufacturing an electrode material for a lithium-ion rechargeable battery according to Claim 2 or 3,
wherein the thermally conductive auxiliary substance is a carbonaceous material.

5. An electrode for a lithium-ion rechargeable battery comprising:
the electrode material for a lithium-ion rechargeable battery according to Claim 1.

6. A lithium-ion rechargeable battery comprising:
a cathode;
an anode; and
a non-aqueous electrolyte,
wherein the electrode for a lithium-ion rechargeable battery according to Claim 5 is provided as the cathode.
